# Europäisches Patentamt

# European Patent Office

# Office européen des brevets

(11) Veröffentlichungsnummer: **0 000 862**
**A1**

(12) **EUROPÄISCHE PATENTANMELDUNG**

(21) Anmeldenummer: 78100119.3

(22) Anmeldetag: 08.06.78

(51) Int. Cl.²: **E 03 F 5/06,** E 01 C 11/22, **E 04 D 13/04**

(30) Priorität: 20.08.77 DE 7725889 U
11.02.78 DE 7804071 U
28.04.78 DE 7813053 U

(43) Veröffentlichungstag der Anmeldung: 07.03.79
Patentblatt 79/5

(84) Benannte Vertragsstaaten: BE CH FR LU NL

(71) Anmelder: **Passavant-Werke Michelbacher Hütte,
D-6209 Aarbergen 7 (DE)**

(72) Erfinder: **Kunz, Dieter,Ing. (grad), Talblick 3, D-6209
Aarbergen 1 (DE)**
Erfinder: **Meyer, Thomas, Ing. (grad), Limburger
Strasse 4, D-6251 Holzheim (DE)**
Erfinder: **Hickl, Herbert, Palmbachstrasse 10, D-6209
Aarbergen 5 (DE)**
Erfinder: **Meyer, Horst, Gartenstrasse 3, D-5429
Allendorf (DE)**
Erfinder: **Plettenberg, Werner, Dipl.-Wirtschafts-Ing.,
Heidestrasse 14, D-6209 Aarbergen 2 (DE)**

(54) **Bodenentwässerungsrinne für Nassräume.**

(57) Die Erfindung betrifft Bodenentwässerungsrinnen für
Nassräume. Es wird ein Bausatz aus mehreren Rinnenbauteilen (1, 3, 4, 13, 24) angegeben, die derart gleiche Anschlussmasse und Verbindungselemente aufweisen, dass
sie in beliebiger Zahl und Anordnung verknüpft werden
können. Bei Verwendung von Schrauben als Verbindungselemente sind die Flansche (8, 18) der Rinnenabschnitte
(1, 3, 13) in symmetrischer Anordnung mit Gewindestiften
(10, 10', 10'') und Durchgangslöchern (9, 9', 9'') versehen, die paarweise zusammenpassen. Die Abschlusswände
(4), die auch als Zwischenwände verwendet werden können, sind nur mit Durchgangslöchern
(19) versehen. Der Boden der Abschnitte kann ein zu einer
oder mehreren Längsrillen (14) hin verlaufendes Quergefälle haben und mit dorthin mündenden Querrillen (15)
versehen sein. Eine Spülvorrichtung (17) mit Spüldüsen
dient der Reinigung oder Desinfektion.

PASSAVANT - WERKE
MICHELBACHER HÜTTE

6209 Aarbergen  7

- - - - - - - - - -

## Bodenentwässerungsrinne für Naßräume

Die Erfindung betrifft eine an mindestens eine Ablaufleitung anschließbare Bodenentwässerungsrinne für Naßräume,
insbesondere für Großküchen, Schlachthäuser und dgl.

In derartigen Räumen fallen bei ihrer Benutzung oder bei
der Säuberung des Bodens größere Wassermengen an, die
schnell und hygienisch abgeführt werden müssen. Man sieht
deshalb im Boden lange, mit Einlaufrosten abgedeckte Rinnen
vor, die ein zu der Ablaufleitung führendes Längsgefälle
haben. Dieses Gefälle kann stets in derselben Richtung verlaufen, so daß sich für die Rinnenböden ein sägezahnartiges
Profil ergibt, an dessen tiefsten Stellen jeweils eine Ablauföffnung angeordnet ist. Auch eine symmetrische Ausbildung der Rinnen ist möglich, so daß bei mehreren aneinandergereihten Rinnen dieser Ausführungsform die Rinnenböden insgesamt einen wellenförmigen Verlauf haben.

/2

An welchen Stellen Ablauföffnungen angeordnet werden, ergibt sich meist aus den Möglichkeiten zum Anschluß an die Abflußrohre. Dadurch ist es nötig, die Länge jeder Rinne je nach Bedarf verändern zu müssen. Bei den bisher bekannten, einstückigen Rinnen bedeutete dies entweder eine Einzelanfertigung oder eine Vielzahl von auf Lager zu haltenden Rinnenmodellen. Beides ist teuer und wenig befriedigend. Es bestand daher die Aufgabe, ein an die verschiedensten Einbauverhältnisse anpassungsfähiges System zu finden.

Die Lösung dieser Aufgabe besteht darin, daß der Rinnenkörper aus mehreren, stirnseitig offenen, mit ihren Stirnseiten lösbar aneinandergesetzten Abschnitten und aus mehreren stirnseitig lösbar angesetzten Abschlußwänden besteht, wobei die an den Stirnenden gegebenenfalls eine unterschiedliche Bodentiefe aufweisenden Abschnitte mit nach außen vorspringenden Befestigungsflanschen versehen sind, die untereinander und mit den Abschlußwänden gleiche Anschlußmaße haben. Statt eines durchgehenden Rinnenkörpers mit fest miteinander verbundenen Böden, Wänden und Stirnseiten wird die Rinne nun aus mehreren Teilen eines Bausatzes zusammengesetzt. Dabei enthält der Bausatz einen Abschnitt mit einer Ablauföffnung oder einem Anschlußkragen für einen Bodenablauf, mehrere verschiedene lange und/oder verschieden tiefe Rinnenabschnitte und eine Sorte Abschlußwände. Aus einem solchen Bausatz kann für jeden Anwendungsfall eine passende Rinne zusammengestellt werden, wobei lediglich darauf zu achten ist, daß jeder Abschnitt zu der nächstliegenden Ablauföffnung hin ein ununterbrochenes Gefälle hat. Außer an den Enden der gesamten Rinne können Abschlußwände auch dort eingefügt werden, wo das Gefälle eine höchste Erhebung hat. Dort dienen sie dann der weiteren Versteifung. Eine weitere

/3

Steigerung der Festigkeit kann dadurch erreicht werden, daß der Boden jedes Abschnitts ein von beiden Seiten zur Längsmitte hin gerichtetes Quergefälle hat. Der Boden weist also in Längsrichtung einen Knick auf, der die Beulsicherheit erhöht. Bildet man diesen Knick als Längsrille aus und versieht die dahin abfallenden Bodenabschnitte mit Querrillen, dann wird außer der Steifigkeit auch noch das Ablaufverhalten verbessert, und zwar dadurch, daß das Wasser in den Rillen mit höherer Geschwindigkeit fließt und Schmutzstoffen keine Gelegenheit zu unerwünschtem Absetzen läßt. Dies gilt auch dann, wenn das Wasser aus einer zusätzlich vorgesehenen Spülvorrichtung stammt. Eine sehr vorteilhafte Möglichkeit zur Verbindung der Rinnenabschnitte ist neben weiteren Details der Neuerung an Hand der Zeichnungen nachfolgend genauer beschrieben.

Es zeigen:

Fig. 1   eine aus zwei Abschnitten bestehende Rinne im vertikalen Längsschnitt,

Fig. 2   im kleineren Maßstab eine für größere Rinnenlängen geeignete Bauart,

Fig. 3   eine aus vier Abschnitten bestehende Rinne mit Anschlußmöglichkeit an zwei Bodenabläufe,

Fig. 4   ein System zur Verschraubung der Rinnenabschnitte und der Abschlußwände in perspektivischer Ansicht,

Fig. 5 und 6 einen mit Quer- und Längsrillen versehener Boden eines Rinnenabschnitts im Schnitt und in der Draufsicht, und

/4

Fig. 7 eine dreiteilige Rinne mit einer Spülvorrichtung an der Stirnwand.

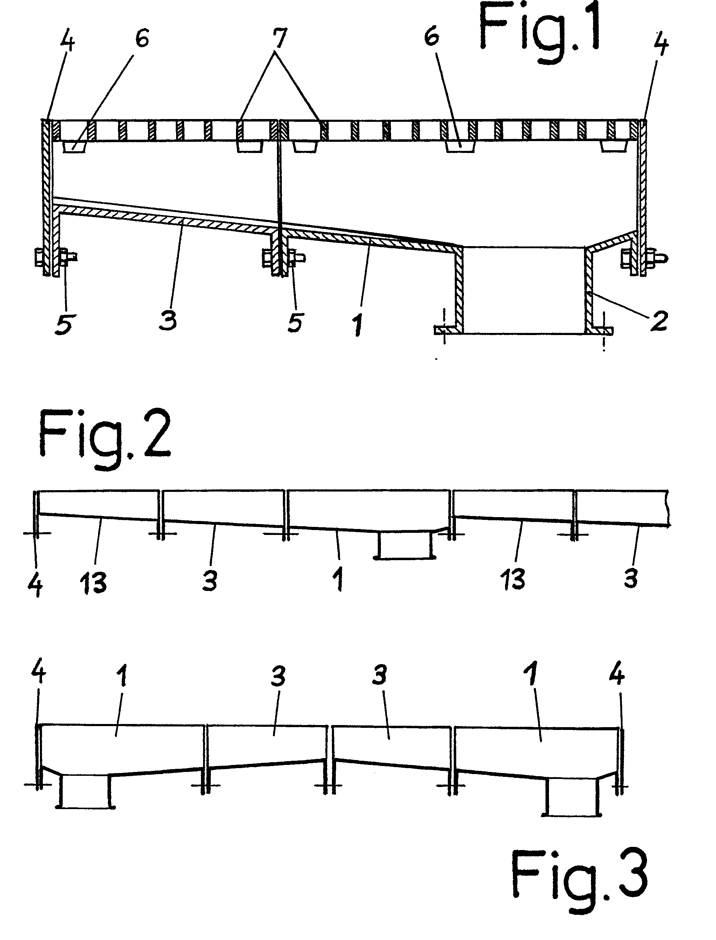

Die in Fig. 1 dargestellte Bodenentwässerungsrinne besteht aus einem Hauptabschnitt 1 mit einem Kragen 2 zum Anschluß an einen (nicht dargestellten) Bodenablauf, einem Zusatzabschnitt 3 und zwei gleich ausgebildeten Abschlußwänden 4. Die Abschnitte und die Abschlußwände sind durch Schrauben 5 miteinander verbunden und durch Flachdichtungen nach außen hin abgedichtet. An den Längswänden sind Auflagen 6 für die Einlaufroste 7 vorgesehen. Um insbesondere den Zusatzabschnitt 3 zu versteifen, erhält der Boden einen in der Längsmitte verlaufenden Knick nach unten, woraus sich ein von beiden Seiten zur Längsmitte hin gerichtetes Quergefälle ergibt.

Müssen Entwässerungsrinnen von vielen Metern Länge erstellt werden, dann müssen in bestimmten Abständen Bodenabläufe vorgesehen sein, zu denen das Wasser von einer oder von beiden Seiten her hingeleitet wird. Bei Anwendung des ersten Prizips ergibt sich die in Fig. 2 dargestellte, mit einem sägezahnartigen Gefälle versehene Rinnenbauart. Hier sind jedem Hauptabschnitt 1 zwei Zusatzabschnitte 3, 13 zugeordnet, die eine derartig unterschiedliche Tiefe haben, daß sich in Verbindung mit dem Gefälle des Hauptabschnitts 1 ein durchgehendes Gefälle ergibt. Die Rinne kann sich nach rechts in beliebiger Wiederholung fortsetzen. Da aus dem Zusatzabschnitt 13 in den links benachbarten Hauptabschnitt 1 praktisch kein Wasser läuft, kann an dieser Stelle auch eine Querwand eingebaut werden, die der Steifigkeit sehr dienlich ist.

Eine etwas kürzere, aus insgesamt vier Abschnitten bestehende Rinne ist in Fig. 3 gezeigt. Hierbei ist eine symmetrische Anordnung in der Weise getroffen, daß zwischen zwei äußeren Hauptabschnitten 1 zwei Zusatzabschnitte 3 spiegelbildlich zueinander angeordnet und durch Anschlußwände 4 stirnseitig verschlossen sind. Durch Einfügen von zwei weiteren Zusatzabschnitten 13, wie sie z.B. aus der Fig. 2 zu ersehen sind, kann auch diese Rinnenbauart beliebig verlängert werden.

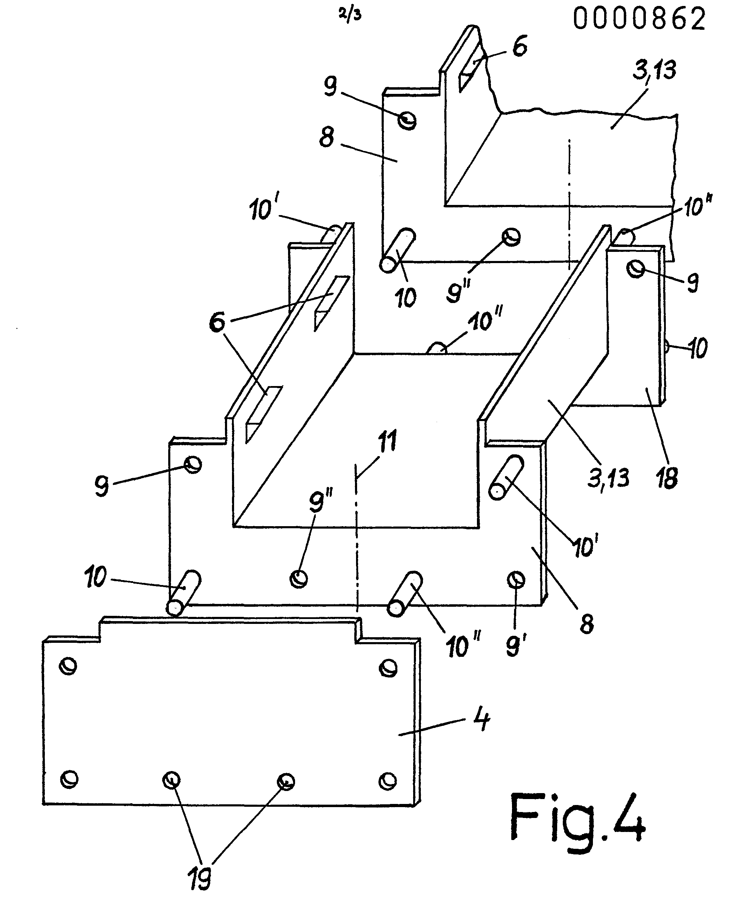

Voraussetzung für die beliebige Aneinanderreihung von Rinnenabschnitten ist, daß die Flansche und die Mittel zum Verbinden gleiche Anschlußmaße haben. Ein System, das dieser Forderung nachkommt, ist in Fig. 4 gezeigt. Hier enthält jeder zu einem Rinnenabschnitt 3, 13 gehörender Flansch 8 bzw. 18 eine gleiche Zahl von Löchern 9 und Gewindestiften 10. Diese sind so angeordnet, daß jedem Loch 9 auf dem symmetrisch zur Mittellinie 11 liegenden Flanschabschnitt ein Gewindestift 10 gegenüber liegt. So bilden z.B. das Loch 9 und der Gewindestift 10' das erste, der Gewindestift 10 und das Loch 9' das zweite und das Loch 9'' und der Gewindestift 10'' das dritte Paar. Am anderen Flansch 18' des Rinnenabschnitts 3 findet sich dieselbe paarweise Anordnung, jedoch um 180° gedreht derart, daß der Flansch 18 in der Ansicht von außen dieselbe Verteilung der Löcher und Gewindestifte zeigt. Auch dieser Flansch enthält demnach oben links wieder ein Loch 9 und oben rechts einen Gewindestift 10'. Mit diesem System ist es möglich, alle Bauformen von Rinnenabschnitten in beliebiger Zahl und Anordnung aneinanderzureihen. Je zwei miteinander zu verbindende Flansche sind dann an sechs Stellen miteinander verschraubt. Wobei die aufzudrehenden Muttern abwechselnd auf der einen und anderen Seite der Flanschverbindungen liegen.

Auch das Einfügen einer Abschlußwand 4 bereitet keine Schwierigkeiten, wenn diese wie gezeigt, an den sechs Verbindungsstellen durchgehende Löcher 19 aufweist. Wird die Abschlußwand an das Ende der Rinne angesetzt, dann stehen zu ihrer Befestigung drei vom benachbarten Flansch vorstehende Gewindestifte 1o zur Verfügung; an den drei restlichen Befestigungsstellen werden Schrauben angebracht.

Die Flansche 8 und 18 sind oben etwas kürzer gehalten als die Längswand des Rinnenabschnitts. Auch die Abschlußwand 4 enthält an diesen Stellen Ausschnitte. Dadurch wird erreicht, daß von der ganzen Entwässerungsrinne nur die die Einlaufroste umfassenden Kanten des Rinnenkörpers mit dem Fußboden bündig und sichtbar sind. Die als Bodenbelag verwendeten Fliesen können rundum bis an diese Kanten verlegt werden.

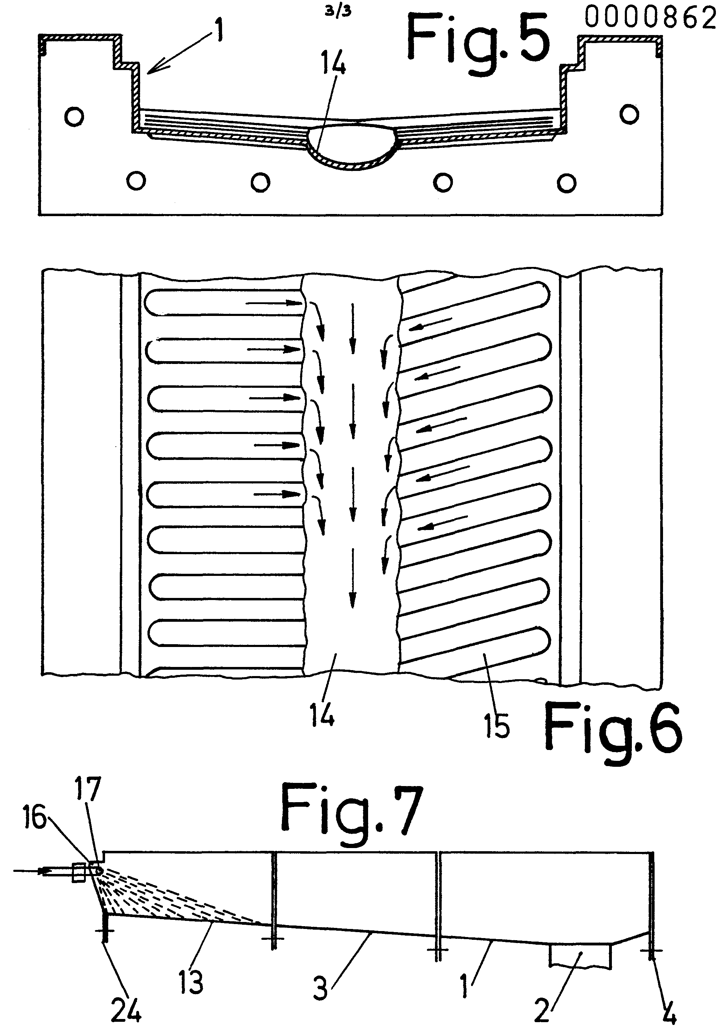

In den Figuren 5 und 6 ist ein Rinnenabschnitt 21 zu sehen, dessen Boden ein zu der in Längsmitte verlaufenden Längsrille 14 hin gerichtetes Quergefälle aufweist. Der Boden ist mit in Richtung dieses Gefälles verlaufenden Querrillen 15 versehen, die rechtwinklig oder unter spitzem Winkel in die Längsrille münden.

Bei der aus Fig. 7 ersichtlichen Rinnenbauart ist die an den äußersten Abschnitt 13 angesetzte Abschlußwand 24 mit einer Ausbuchtung 16 versehen, die ein Spritzrohr 17 aufnimmt. Die von ihm ausgehenden Sprühstrahlen bestreichen im wesentlichen den ganzen Boden dieses Abschnitts.

Weitere, sich im Rahmen der Erfindung bewegende Ausgestaltungen und Abänderungen sind durchaus möglich. So können z.B. besonders lange Rinnenabschnitte außen zusätzlich mit Blechlaschen versehen sein, die nach außen vorspringen und der besseren Verankerung in der Decke

/7

dienen. Diese Laschen können während des Transports flach umgelegt und erst kurz vor dem Einbau nach außen weggebogen werden. Am Boden der Rinnenabschnitte können höhenverstellbare Stützfüße als Einstellhilfe beim Einbetten vorgesehen sein.

Die in Richtung des Längsgefälles des Rinnenbodens verlaufende  Sammelrille kann unsymmetrisch oder ganz auf einer Längsseite angeordnet sein. Bei Rinnen mit großer Breite sind auch mehrere Längsrillen denkbar.

Aarbergen, den 31. Mai 1978
Pat. BK/Bef

Patentansprüche

1. An mindestens eine Ablaufleitung anschlißbare Bodenentwässerungsrinne für Naßräume, insbesondere Großküchen, Schlachthäuser und dgl., mit einem Rinnenkörper, dessen Längswände Auflagen für Einlaufroste und dessen mit Längsgefälle verlaufender Boden an der tiefsten Stelle eine Ablauföffnung aufweisen, dadurch gekennzeichnet, daß der Rinnenkörper aus mehreren, stirnseitig offenen, mit ihren Stirnseiten lösbar aneinandergesetzten Abschnitten (1, 3, 13) und aus mehreren stirnseitig lösbar angesetzten Abschlußwänden (4, 24) besteht, wobei die an den Stirnenden ggf. eine unterschiedliche Bodentiefe aufweisenden Abschnitte mit nach außen vorspringenden Befestigungsflanschen (8, 18) versehen sind, die untereinander und mit den Abschlußwänden (4, 24) gleiche Anschlußmaße haben.

2. Bodenentwässerungsrinne nach Anspruch 1, mit Mitteln zur Schraubverbindung der Befestigungsflansche, dadurch gekennzeichnet, daß bei der einen Hälfte der Schraubverbindungen jedes Flansches (8, 18) feste Gewindestifte (1o, 1o', 1o'') und bei der anderen Hälfte Löcher (9, 9', 9'') für die Gewindestifte vorgesehen sind, wobei die Gewindestifte und Löcher an jedem Flansch bezüglich dessen vertikaler Mittelachse (11) derart symmetrisch angeordnet sind, daß jedem Gewindestift (z.B. 1o) auf der anderen Flanschhälfte ein Loch (z.B. 9'), und umgekehrt, gegenüberliegt, daß die Anordnung der Gewindestifte und Löcher bei allen Flanschen (8, 18) der Abschnitte (3, 13) in stirnseitiger Draufsicht auf den Flansch identisch ist, und daß die Abschlußwände (4) an allen Verbindungsstellen Löcher (19) aufweisen.

0000862

3. Bodenentwässerungsrinne nach Anspruch 1 oder 2, dadurch gekennzeichnet, daß der Boden jedes Abschnitts (1, 3, 13) ein von beiden Seiten zur Längsmitte hin gerichtetes Quergefälle hat.

4. Bodenentwässerungsrinne nach Anspruch 3, dadurch gekennzeichnet, daß der Boden jedes Abschnitts (21)des Rinnenkörpers (1) im wesentlichen in Richtung des Quergefälles verlaufende Querrillen (15) aufweist, die in im wesentlichen in Richtung des Längsgefälles verlaufende Sammelrillen (14) münden.

5. Bodenentwässerungsrinne nach Anspruch 4, dadurch gekennzeichnet, daß die Querrillen (15) unter einem spitzen Winkel in die Sammelrillen (14) münden.

6. Bodenentwässerungsrinne nach einem oder mehreren der vorstehenden Ansprüche, dadurch gekennzeichnet, daß an mindestens einer Längsseite und/oder an mindestens einer Stirnseite der Bodenentwässerungsrinne eine Spülvorrichtung (17) angeordnet ist, die mit Austrittsöffnungen oder Düsen versehen ist.

7. Bodenentwässerungsrinne nach Anspruch 6 bis 3, dadurch gekennzeichnet, daß die Austrittsöffnungen oder Düsen derart ausgerichtet oder ausrichtbar sind, daß außer dem Boden und den Seitenwänden der Bodenentwässerungsrinne auch der Einlaufrost von den Spülstrahlen erreicht wird.

8. Bodenentwässerungsrinne nach Anspruch 6 oder 7, dadurch gekennzeichnet, daß die Spülvorrichtung (17) in einer Ausbuchtung (16) der Rinnenwand angeordnet ist.

Aarbergen, den 31. Mai 1978
Pat. BK/Bef

# Fig.1

# Fig.2

# Fig.3

Fig.4

Fig.5

Fig.6

Fig.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>GB - A - 916 105</u> (NEWMAN)<br>* Seite 1, Zeilen 70-88; Seite 2; Figuren * | 1 |
| | <u>US - A - 2 701 027</u> (SCOVILLE)<br>* Spalte 1, Zeilen 60-81; Spalte 2, Zeilen 1-51; Figuren * | 1 |
| | <u>US - A - 3 225 545</u> (FLEGEL)<br>* Spalte 2, Zeilen 63-72; Spalte 3; Spalte 4, Zeilen 1-54; Figuren * | 1 |
| | <u>DE - A - 2 254 364</u> (HAUGER)<br>* Seiten 5,6; Figuren * | 1 |
| | <u>FR - A - 2 210 204</u> (FARGE)<br>* Seite 2, Zeilen 28-40; Seite 3; Figuren * | 6-8 |
| | <u>CH - A - 107 354</u> (ZBINDEN)<br>* Seite 1, Spalte 2, Zeilen 8-24; Seite 2, Spalte 1; Figuren * | 4,5 |
| | <u>FR - A - 1 181 762</u> (PIOT)<br>* Seite 1; Figuren * | 3,4,5 |

**KLASSIFIKATION DER ANMELDUNG (Int.Cl.²)**

E 03 F 5/06
E 01 C 11/22
E 04 D 13/04

**RECHERCHIERTE SACHGEBIETE (Int. Cl.²)**

E 03 F
E 01 C
A 01 K

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort<br>Den Haag | Abschlußdatum der Recherche<br>29-11-1978 | Prüfer<br>DAMITIO |
|---|---|---|

EPA form 1503.1  06.78